# EUROPÄISCHE PATENTANMELDUNG

(11) **EP 2 361 748 A1**
(43) Veröffentlichungstag der Anmeldung: **31.08.2011**
(21) Anmeldenummer: 11154959.8
(22) Anmeldetag: 18.02.2011
(51) Int. Cl.: B29C 47/34, B29C 47/90, B29C 69/00

(54) **Verbesserte Vorrichtung zum Herstellen von länglichen Formkörpern aus Kunststoff im Extrusionsverfahren**

(30) Priorität: 26.02.2010 AT 1122010 U
(71) Anmelder: Politsch Kunststofftechnik GmbH, 4552 Wartberg/Krems (AT)
(72) Erfinder: Schwaiger, Meinhard, 4040 Linz (AT)
(74) Vertreter: Babeluk, Michael

(57) **Zusammenfassung**

Die Erfindung bezieht sich auf eine Vorrichtung (1) zur automatisierten und gleichmäßigen Vorspannung von Förderketten in Profilraupenabzügen.

## Beschreibung

Die Erfindung bezieht sich auf eine verbesserte Vorrichtung zum Herstellen von länglichen Formstücken aus Kunststoff, vorzugsweise hergestellt im Extrusionsverfahren. Bei diesem Produktionsverfahren für längliche Formstücke sind mindestens ein Extruder zur Plastifizierung des Kunststoffmaterials, eine Werkzeugdüse, ein Kalibrierwerkzeugsystem zur definierten Abkühlung und Formgebung des derart hergestellten Produktes, ein Kalibriertisch, der die erforderliche Kühlwassermenge und Vakuumenergie zur Verfügung stellt, ein Profilraupenabzug, der das Kunststoffprofil mit besonders gleichmäßiger Geschwindigkeit durch das Kalibrierwerkzeugsystem zieht und eine Trennvorrichtung, ausgeführt als Säge oder spanlose Messertrenneinheit, mit deren Hilfe aus dem endlos geformten Profilstrang Profilstücke mit definierter Länge hergestellt werden können. Zur Erreichung einer hohen Qualität der derart hergestellten Formstücke ist unter anderem die Gleichmäßigkeit der sogenannten Abzugsgeschwindigkeit von hoher Bedeutung. Dies setzt voraus, dass die mit der Profiloberfläche kraftschlüssig verbundenen Raupenstollen auf einer korrekt vorgespannten Antriebskette unverrückbar verbunden sind. Aufgrund der hohen Abzugskräfte kommt es jedoch im Dauerbetrieb zu einer undefinierten Kettenlängung, die bis zu mehrere Prozent der Kettenlänge betragen kann. Um ein Durchhängen der Kette einerseits und eine hohe gleichmäßige Abzugsgeschwindigkeit andererseits gewährleisten zu können, sind diese Antriebsketten in Abhängigkeit von der tatsächlichen Beanspruchung häufig im Betrieb nach zu spannen. Auch dieser Vorgang hat besonders sorgfältig zu erfolgen.

Dem Stand der Technik entsprechen dazu mechanische Spannvorrichtungen mittels Schrauben und Maßbandindikatoren. Nachteilig wirken sich bei diesen bekannten Lösungen aus:
- dass das Nachspannen der Förderketten vom Arbeitsausführenden abhängig ist und keine exakte Vorspannung eingehalten werden kann
- die erforderlichen Zeitintervalle zumeist überschritten werden
- die Zugänglichkeit mittels Schraubenschlüssel oder ähnlicher Spannhilfsmittel vielfach erschwert ist, vor allem bei sogenannten Doppelstrangextrusionsmaschinen

Aufgabe der gegenständlichen Erfindung ist die Vermeidung dieser Nachteile.

Erfindungsgemäß wird die Aufgabe dadurch gelöst, dass die Förderketten permanent mittels einer Vorrichtung vorgespannt werden. Dies erfolgt in bevorzugter Weise derart, dass eine Drehachse, auf welcher zwei Umlenkkettenräder montiert sind, in Längsrichtung des Raupenträgers verschiebbar angeordnet ist und mittels eines elastisch vorgespannten Druckelementes eine konstante Vorspannung aufgebaut werden kann. Zur Vorspannung können Pneumatikzylinder, Hydraulikzylinder, elektrisch angetriebene Verstelleinheiten oder federbelastete Verstelleinheiten verwendet werden.

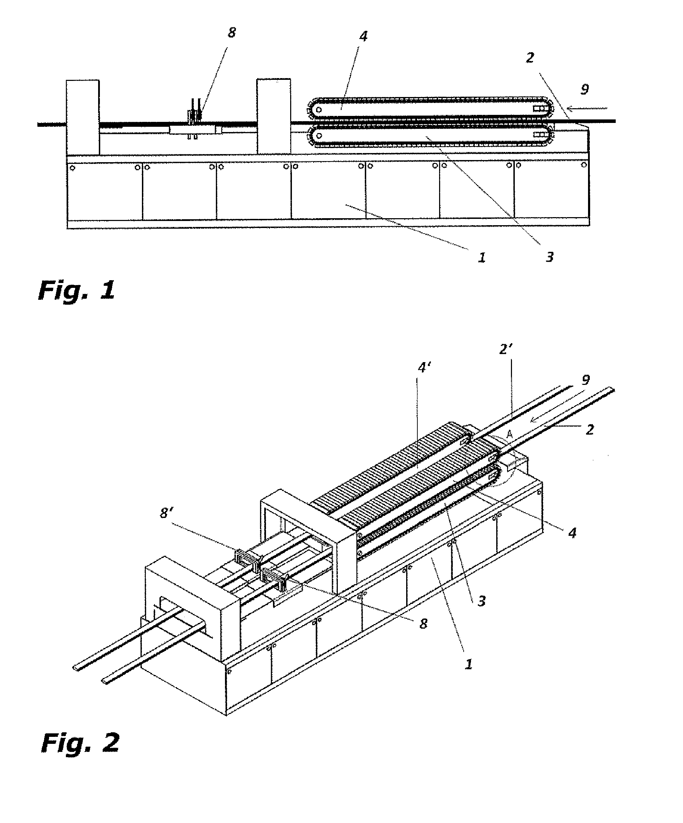

Die Erfindung wird anhand der Figuren 1 bis 3 näher erläutert:
Fig. 1 zeigt jenen Teil einer Extrusionsanlage, der zum gleichmäßigen Abziehen der Profile durch ein Kalibrierwerkzeugsystem erforderlich ist. Das Profil (2) wird mittels dem Profilraupenabzug (1) gleichmäßig in Förderrichtung (9) transportiert, wobei das Profil (2) zwischen der oberen Raupe (4) und unteren Raupe (3) eingeklemmt wird, um eine ausreichend große Reibungskraft aufzubauen. Auslaufseitig befindet sich eine Trennvorrichtung (8) zum Ablängen der endlos hergestellten Profilstücke.
Fig. 2 zeigt denselben Teil der Extrusionsanlage in Schrägansicht. Der Raupenabzug (1) ist als Doppelstrangabzug ausgebildet, sodass zwei Profile (2, 2') gleichzeitig und unabhängig voneinander produziert werden können; die Profile werden in Förderrichtung (9) gefördert. Dazu sind zwei Raupenpaare (3, 4) und (3' - nicht sichtbar, 4') vorgesehen. Die Trennvorrichtung besteht aus zwei unabhängig voneinander arbeitenden Einheiten (8, 8').

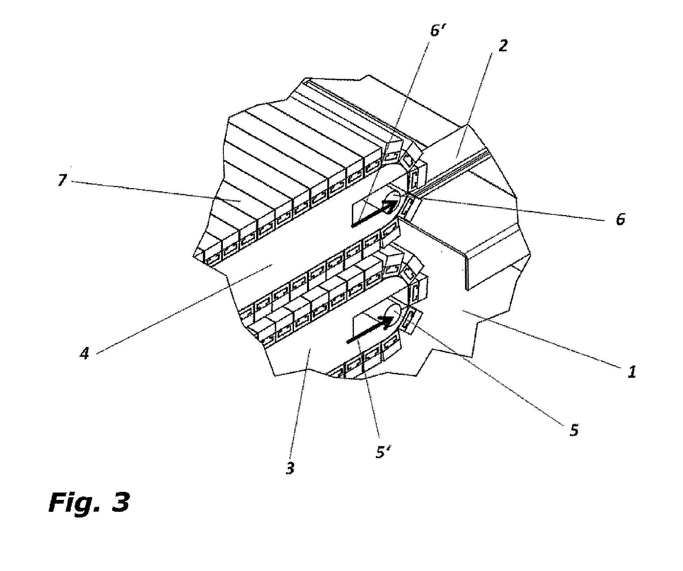

Fig. 3 zeigt ein Detail (A) aus Fig. 2 in Vergrößerung. Das Profil (2) wird mit dem Raupenpaar transportiert, bestehend aus dem unteren Raupenträger (3) und dem oberen Raupenträger (4), den Profilstollen (7), die auf nicht näher dargestellten Förderketten montiert sind. Die Förderketten mit den Profilstollen (7) werden an den Enden des Raupenträgers (3, 4) über nicht näher dargestellte Kettenräder umgelenkt, die auf den Kettenumlenkwellen (5, 6) montiert sind. Die Kettenumlenkwellen (5, 6) sind innerhalb der Raupenträger (3, 4) verschiebbar in Richtung (5', 6') angeordnet. Für die Verschiebung der Kettenumlenkwellen (5, 6) in Richtung (5', 6') sind nicht näher dargestellte Verstelleinheiten vorgesehen, die pneumatisch, hydraulisch, elektrisch oder mittels Federbelastung die erforderlichen Verstellkräfte aufbauen. Mittels dieser Verstellkräfte werden die Förderketten, auf denen die Profilstollen (7) montiert sind, korrekt vorgespannt.

## Patentansprüche

1. Vorrichtung zur Herstellung von länglichen Formstücken (2) aus Kunststoff im Extrusionsverfahren mit einem Profilraupenabzug (1) zum besonders gleichmäßigen transportieren der Profilstäbe durch das Kalibrierwerkzeug, **dadurch gekennzeichnet, dass** die Förderketten mit den Profilstollen (7) in den Raupenträgern (3, 4) automatisiert vorspannbar sind.

2. Vorrichtung nach Anspruch 1, **dadurch gekennzeichnet, dass** die Kettenräder mittels der Ketteumlenkwellen (5, 6) innerhalb der Raupenträger (3, 4) in Richtung (5', 6') verschiebbar sind.

3. Vorrichtung nach einem der Ansprüche 1 bis 2, **dadurch gekennzeichnet, dass** die Kettenumlenkwellen (5, 6) pneumatisch, hydraulisch, elektrisch oder mittels Federbelastung zur Aufnahme der Vorspannkräfte angetrieben werden.

4. Vorrichtung nach einem der Ansprüche 1 bis 3, **dadurch gekennzeichnet, dass** die Vorspannkräfte mittels Hebelübersetzung erzeugt werden können.

5. Vorrichtung nach einem der Ansprüche 1 bis 4, **dadurch gekennzeichnet, dass** die Kettenvorspannung im jeweils unbelasteten Zustand erzeugt wird und der Vorspannzustand im Belastungszustand mittels einer Arretierfunktion blockiert wird und Energieausfälle überbrückt werden können.

6. Vorrichtung nach einem der Ansprüche 1 bis 5, **dadurch gekennzeichnet, dass** die Vorspanneinrichtung in den Raupenträger (3, 4) integriert ist.

7. Vorrichtung nach einem der Ansprüche 1 bis 6, **dadurch gekennzeichnet, dass** die Vorspannvorrichtung oberhalb des oberen Raupenträgers (4) und unterhalb des unteren Raupenträgers (3) angeordnet ist.

8. Vorrichtung nach einem der Ansprüche 1 bis 7, **dadurch gekennzeichnet, dass** ein oder zwei parallel angeordnete Raupenpaare damit ausgerüstet werden können und damit auch für eine Doppelstrangextrusionsanlage geeignet ist.
